# EUROPÄISCHE PATENTANMELDUNG

(11) **EP 4 035 811 A1**
(43) Veröffentlichungstag der Anmeldung: **03.08.2022**
(21) Anmeldenummer: 21154774.0
(22) Anmeldetag: 02.02.2021
(51) Int. Cl.: B23B 31/20

(54) **SPANNMITTEL UND REDUZIERRING HIERFÜR**

(71) Anmelder: Hainbuch GmbH Spannende Technik, 71672 Marbach (DE)
(72) Erfinder: Bauer, Ralf, 97990 Weikersheim (DE)
(74) Vertreter: Witte, Weller und Partner Patentanwälte mbB Stuttgart

(57) **Zusammenfassung**

Bekannt sind Spannmittel (100) zum Festlegen von Werkstücken (102), insbesondere zum Zwecke der Rotationsbearbeitung dieser Werkstücke (102). Ein solches Spannmittel (100) verfügt über ein in einer Axialspannrichtung (2A) erstrecktes Spannfutter (10) mit einem sich in der Axialspannrichtung (2A) verjüngenden Aufnahmebereich (12) zur Aufnahme eines Spannkopfes sowie über einen hierein einzusetzenden Spannkopf (80), der aus einer Mehrzahl von ringartig zusammengefügten und gegeneinander beweglichen Spannkopfsegmenten (86) gebildet ist. Mittels eines Zugorgans (20) kann der Spannkopfes (80) gegenüber dem Spannfutter (10) in Axialspannrichtung kraftbeaufschlagt werden, um die Spannkopfsegmente (86) radial aufeinander zu zu verlagern.

Es wird vorgeschlagen, zwischen einer Innenspannfläche (14) des Spannfutters (10) und einer Außenspannfläche (84) des Spannkopfes (80) einen Reduzierring (40) vorzusehen. Dieser Reduzierring (40) verfügt in ringförmiger Anordnung über eine Mehrzahl von gegeneinander beweglichen Segmentkörpern (36).

## Beschreibung

### ANWENDUNGSGEBIET UND STAND DER TECHNIK

Die Erfindung betrifft ein Spannmittel mit einem Spannfutter und einem Spannkopf, der der Aufnahme eines Werkstücks dient.

Gattungsgemäße Spannmittel sind allgemein bekannt. Sie weisen ein Spannfutter zur Anbringung an einer rotativ beweglichen Spindel auf und verfügen über einen Aufnahmebereich, in den der Spannkopf eingesetzt wird. Dieser wiederrum verfügt über einen Spannbereich zur Aufnahme des Werkstücks. Mittels eines im Spannfutter vorgesehenen und axial beweglichen Zugorgans kann eine Zugkraft in den Spannkopf eingekoppelt werden, mittels derer der Spannkopf radial komprimiert und dadurch in einen Spannzustand überführt werden kann, in dem der Spannbereich das Werkstück von außen kraftbeaufschlagt.

Gattungsgemäße Spannmittel gibt es in unterschiedlichen Größen. Die Größe des Spannmittels hängt üblicherweise vom maximalen Werkstückdurchmesser ab. Besonders übliche Spannköpfe können Werkstücke bis zu einem Durchmesser von 80 mm bis 100 mm aufnehmen. Es gibt jedoch auch Spannmittel mit größeren Spannköpfen, beispielsweise zur Aufnahme von Werkstücken mit einem Durchmesser von 120 mm oder mehr.

In der Praxis der Fertigung ist es jedoch häufig wünschenswert, Werkstücke mit deutlich voneinander abweichendem Durchmesser bearbeiten zu können. Um dies ohne aufwändigen Wechsel des Spannfutters bewerkstelligen zu können, wird üblicherweise nur der Spannkopf ausgetauscht. Handelt es sich allerdings um ein Spannfutter, welches für vergleichsweise große Werkstückdurchmesser ausgelegt ist, so muss zur Bearbeitung eines Werkstücks mit einem geringen Werkstückdurchmesser ein Spannkopf Verwendung finden, der trotz eines nur vergleichsweise kleinen Spannbereichs Außenmaße entsprechend dem großen Aufnahmebereich des Spannfutters aufweist. Dies kann zu erheblich höheren Kosten führen. Zudem sind solche Spannköpfe schwer, so dass der Aufwand für das Rüsten der entsprechenden Maschine recht hoch ausfällt.

### AUFGABE UND LÖSUNG

Aufgabe der Erfindung ist es, ein gattungsgemäßes Spannmittel dahingehend weiterzubilden, dass es geringere Kosten für Spannköpfe ermöglicht.

Hierfür wird ein Spannmittel zum Festlegen von Werkstücken vorgeschlagen, insbesondere zum Zwecke der Rotationsbearbeitung dieser Werkstücke, welches in gattungsüblicher Weise über ein Spannfutter und einen Spannkopf verfügt.

Das Spannfutter weist einen sich in der Axialspannrichtung verjüngenden Aufnahmebereich zur Aufnahme eines Spannkopfes auf, wobei der Aufnahmebereich von mindestens einer gegenüber der Axialspannrichtung schräggestellten Innenspannfläche begrenzt ist. Diese Innenspannfläche kann segmentiert sein, wie im Weiteren noch erläutert ist. Sie kann jedoch insbesondere auch eine umlaufende konische Formgebung aufweisen, ohne segmentiert zu sein.

Der Spannkopf weist eine Mehrzahl von ringartig zusammengefügten und gegeneinander beweglichen Spannkopfsegmenten auf. Insbesondere kann es sich um mindestens drei Spannkopfsegmente handeln, die radial aufeinanderzu und voneinander weg beweglich sind, um ein im Zentrum befindliches Werkstück einspannen und lösen zu können. Die Spannkopfsegmente bilden einen vorzugsweise unlösbar gefügten Ring. Insbesondere können sie hierzu über elastische Verbindungsabschnitte kettenartig geschlossen verbunden sein.

Der Spannkopf weist eine sich in Axialspannrichtung verjüngende Form auf und verfügt hierzu außenseitig über gegenüber der Axialrichtung schräggestellte Außenspannflächen.

Zum Zwecke der Erzielung einer radialen Bewegung ist in gattungsüblicher Weise ein Zugorgan vorgesehen. Dieses dient der Kraftbeaufschlagung des Spannkopfes gegenüber dem Spannfutter in Axialspannrichtung, um durch die Kraftbeaufschlagung mittelbar die Spannkopfsegmente radial aufeinander zu zu verlagern.

Das Spannfutter und der Spannkopf können in grundsätzlich gegenüber dem bekannten Stand der Technik unveränderter Weise ausgebildet sein.

Erfindungsgemäß ist vorgesehen, dass zwischen der mindestens einen Innenspannfläche des Spannfutters und den Außenspannflächen des Spannkopfes ein Reduzierring angeordnet ist. Dieser Reduzierring bildet einen Adapter zwischen den genannten Flächen, so dass die schräggestellte Innenspannfläche des Spannfutters und die schräggestellte Außenspannfläche des Spankopfes sich nicht in unmittelbarem Kontakt befinden.

Stattdessen weist der Reduzierring an seiner Außenseite korrespondierend zu der mindestens einen Innenspannfläche des Spannfutters mindestens eine außenseitige schräggestellte Reduzierring-Außenspannfläche und an seiner Innenseite korrespondierend zu den Außenspannflächen des Spannkopfes mindestens eine innenseitige schräggestellte Reduzierring-Innenspannfläche auf. Diese Spannflächen des Reduzierrings liegen an der mindestens einen Innenspannfläche des Spannfutters und den Außenspannflächen des Spannkopfes an.

Der Reduzierring selbst ist auch segmentiert. Er weist in ringförmiger Anordnung eine Mehrzahl von gegeneinander beweglichen Segmentkörpern auf, an deren Außenseite jeweils mindestens eine Reduzierring-Außenspannfläche und an deren Innenseite jeweils mindestens eine Reduzierring-Innenspannfläche vorgesehen ist. Ähnlich wie zu den Spannkopfsegmenten erläutert, sind auch die Segmentkörper des Reduzierrings vorzugsweise über elastische Verbindungskörper ringförmig miteinander verbunden.

Die Erfindung betrifft neben dem Spannmittel umfassend das Spannfutter, den Reduzierring und den Spannkopf auch den Reduzierring selbst sowie ein Set, bestehend aus dem Spannfutter und dem Reduzierring oder bestehend auf den Spannkopf und dem Reduzierring.

Der Reduzierring erfüllt die Aufgabe, Spannköpfe mit vergleichsweise geringem Außendurchmesser im Bereich ihrer Außenspannflächen in Spannfuttern mit vergleichsweise großem Innendurchmesser im Bereich ihrer Innenspannfläche einzusetzen. Insbesondere vorzugsweise beträgt der Innendurchmesserdes Reduzierkopfs zwischen 80 mm und 160 mm, während der Außendurchmesser zwischen 180 mm und 1000 mm beträgt.

Ein erfindungsgemäß vorgesehener Reduzierring bietet eine Vielzahl von Vorteilen. Der üblicherweise wesentlichste Vorteil liegt in den geringeren Kosten des Spannkopfs. Da sowohl das Material als auch der Bearbeitungsaufwand für kleine Spannköpfe erheblich geringer ist und der Reduzierring für viele verschiedene Spannköpfe verwendet werden kann, sinken die Kosten zur flexiblen Verwendung des Spannfutters bei stark variierenden Werkstückdurchmessern erheblich. Weiterhin wird eine gegenüber großen Spannköpfen höhere Flexibilität in der Fertigung erzielt, da Spannköpfe in Spannfuttern stark variierender Größe verwendet werden können. Weiterhin sinkt der Aufwand zum Wechsel des Spannkopfes in erheblichem Maße. So kann ein kleiner Spannkopfhäufig von einer Person allein ausgetauscht werden, während ein großer Spannkopf häufig zwei Personen zur Montage benötigt.

Vorzugsweise ist vorgesehen, dass der Spannkopf und der Reduzierring Kopplungseinrichtungen aufweisen mittels derer die Spannkopfsegmente an die Segmentkörper des Reduzierrings ankoppelbar sind. Hierdurch wird erreicht, dass zumindest bei einer Verlagerung des Reduzierrings in Spannrichtung der Spannkopf zumindest phasenweise axial mitgezogen wird.

Insbesondere kann diese Kopplungseinrichtung auf Seite des Reduzierrings als innenseitig Steg gebildet sein, der entweder umlaufend oder zumindest im Bereich der Segmentkörper vorgesehen ist. Auf Seite des Spannkopfes ist die Kopplungseinrichtung vorzugweise als nach außen weisenderSteg vorgesehen. Insbesondere vorzugsweise ist dieser Steg am Spannkopf im Bereich der genannten elastischen Verbindungsabschnitte unterbrochen, um eine erleichterte Komprimierung des Spannkopfes beim Einsetzen in den Reduzierring zu gestatten.

Im über die Kopplungseinrichtung gekoppelten Zustand wird vorzugsweise ein Formschluss zwischen dem Reduzierring und dem Spannkopf hergestellt, indem der genannte Steg des Spannkopfes hinterden Stegdes Reduzierrings greift. Ein solcher Formschluss kann auch mit anderen Kopplungseinrichtungen erreicht werden.

Der Reduzierring ist mit dem Zugorgan vorzugsweise in ähnlicher Weise gekoppelt. Insbesondere kann vorzugsweise eine Zughülse des Zugorgans mit dem Reduzierring durch eine Kopplungseinrichtung gekoppelt werden. Hierfür kann insbesondere vorgesehen sein, dass der Reduzierring außenseitig einen Steg oder einen anderweitigen Kopplungsabschnitt aufweist, der entweder umlaufend oder vorzugsweise im Bereich der Segmentkörper vorgesehen ist. Insbesondere vorzugsweise ist dieser außenseitige Steg oder Kopplungsabschnitt am Reduzierring im Bereich der genannten elastischen Verbindungsabschnitte unterbrochen, um eine erleichterte Komprimierung des Reduzierrings beim Einsetzen in die Zughülse zu gestatten. Auf Seite der genannten Zughülse ist vorzugweise ein nach innen weisender Steg vorgesehen, der bei einer möglichen Gestaltung umlaufend ausgebildet ist.

Alternativ können das Zugorgan und der Reduzierring auch derart ausgebildet sein, dass der Kopplungsabschnitt des Reduzierrings und das Zugorgan gemeinsam eine Bajonettkopplungseinrichtung bilden.

Vorzugsweise sind an der Innenseite des Aufnahmebereichs des Spannfutters, an der Außenseite des Reduzierrings, an der Innenseite des Reduzierrings und/oder an der Außenseite des Spannkopfes Konturen vorgesehen, die ein bezogen auf eine Rotationsrichtung formschlüssige Kopplung des Spannfutters mit dem Reduzierring und/oder des Reduzierrings mit dem Spannkopf gestattet. Diese Kontur kann insbesondere durch Aussparungen an der Außenseite des Spannkopfes bzw. des Reduzierrings und durch Erhebungen an der Innenseite des Spannfutters bzw. des Reduzierrings gebildet sein. Die Erhebungen können insbesondere durch Stifte oder Schrauben gebildet sein.

Sowohl bei der Formgebung der Außenseite des Reduzierrings und der Innenseite des Aufnahmebereichs des Spannfutters als auch bei der Formgebung der Innenseite des Reduzierrings und der Außenseite des Spannkopfs sind grundsätzlich unterschiedliche Bauweisen möglich.

Gemäß einer Bauweise sind die Außenspannflächen, also die Reduzierring-Außenspannflächen bzw. die Spannkopf-Außenspannflächen, sowie die Innenspannflächen, also die Reduzierring-Innenspannflächen und die Spannfutter-Innenspannflächen, zumindest abschnittsweise eben ausgebildet und gegeneinander angewinkelt. Dies führt dazu, dass bei einer axialen Verlagerung des Reduzierrings und damit des Spannkopfes in Spannrichtung ein durchgehender Flächenkontakt verbleibt.

Gemäß einer zweiten Bauweise kann stattdessen vorgesehen sein, dass statt ebener Flächen die Kontaktflächen zumindest zum Teil durch Konusteilflächen gebildet werden. Insbesondere kann eine Mehrzahl von Reduzierring-Außenspannflächen vorgesehen sein, die jeweils diese Konusteilflächen darstellen. Die Gegenfläche im Aufnahmebereich des Spannfutters kann dann vorzugsweise durch eine umlaufende gemeinsame Konusfläche gebildet sein. Weiterhin kann auch die Innenseite des Reduzierrings durch eine Mehrzahl von Reduzierring-Innenspannflächen gebildet sein, die jeweils Konusteilflächen darstellen. Korrespondierend hierzu ist in einem solchen Fall vorzugsweise vorgesehen, dass auch die Außenspannfläche des Spannkopfes durch Konusteilflächen an den Spannsegmenten gebildet wird.

Bei einer möglichen Ausgestaltung ist vorgesehen, dass die Anzahl der Segmentkörper des Reduzierrings und die Anzahl der Spannkopfsegmente des Spannkopfes identisch ist. Bei einer solchen Ausgestaltung kann im montierten Zustand des Spannkopfes vorgesehen sein, dass jeweils ein Spannkopfsegment genau einem Segmentkörper des Reduzierrings zugeordnet ist. Die radiale Kraftbeaufschlagung der Spannsegmente nach innen erfolgt in einem solchen Falle von genau einem Segmentkörper aus. Vorzugsweise beträgt die Anzahl der Spannsegmente und der Segmentkörper jeweils mindestens drei.

Möglich ist jedoch auch eine Ausgestaltung, bei der die Anzahl der Segmentkörper größer als die Anzahl der Spannkopfsegmente des Spannkopfes ist. Eine beispielhafte Konfiguration könnte dann sechs Segmentkörper aufweisen, die auf drei oder vier Spannkopfsegmente wirken. Eine höhere Anzahl von Spannkörpern am Reduzierring führt zu einer höheren Flexibilität in Hinblick auf die verwendbaren Spannköpfe. Vorzugsweise liegt die Zahl der Segmentkörper des Reduzierrings nicht oberhalb von sechs.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1A und 1B zeigen in perspektivischer DarstellungeinerAusgestaltung eines erfindungsgemäßen Spannmittels in einem zerlegten und einem zusammengesetzten Zustand.
Fig. 2A und 2B zeigen das Spannmittel in einer Seitendarstellung in ungeschnittener und geschnittener Darstellung.
Fig. 3A und 3B zeigen das Spannmittel in ungespannten und im gespannten Zustand.

### DETAILLIERTE BESCHREIBUNG DER AUSFÜHRUNGSBEISPIELE

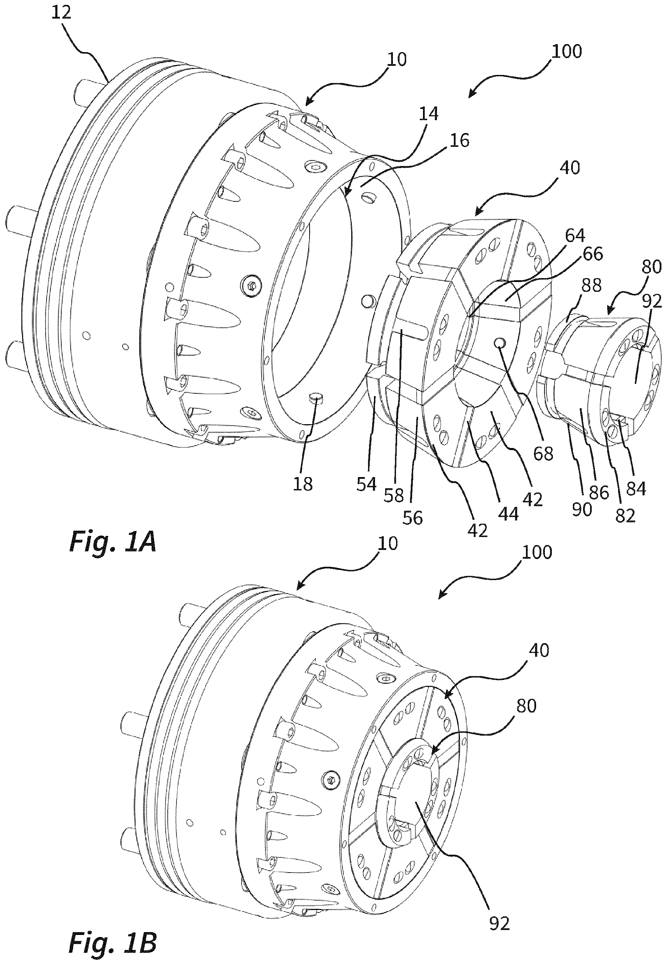

Fig. 1A und 1B zeigen ein Ausführungsbeispiel eines erfindungsgemäßen Spannmittels 100 im zerlegten und im zusammengefügten Zustand.

Das Spannmittel 100 weist ein Spannfutter 10, einen Reduzierring 40 sowie einen Spannkopf 80 auf.

Das Spannfutter 10 ist zur Anbringung an einer rotierenden Spindel vorgesehen. Hierfür verfügt es an seinem proximalen Ende über eine Kopplungsfläche 12. Auf der gegenüberliegenden distalen Seite weist das Spannfutter einen Aufnahmebereich 14 auf, der primär durch eine Konusform gebildet wird. Diese umlaufende Konusform stellt eine gegenüber der Axialspannrichtung 2A schräggestellte Innenspannfläche 16 zur Verfügung. An der Innenspannfläche sind stiftförmige Erhebungen 18 vorgesehen.

Das Spannfutter 10 weist ein Zugorgan 30 auf, welches unter anderem eine Zughülse 32 umfasst. Das Zugorgan 30 und die Zughülse 32 sind in Axialspannrichtung 2A verlagerbar. An der Zughülse 32 ist ein nach innen weisender umlaufender Steg 34 vorgesehen.

Der Reduzierring 40 weist insgesamt sechs in sich starre und vorzugsweise metallische Segmentkörper 42 auf. Diese sind mittels elastischer Verbindungskörper 44 aus Gummi zu einer Ringstruktur miteinander verbunden, wobei die Verbindungskörper 44 vorzugsweise mittels Vulkanisierens an den Metallflächen der Segmentkörper 42 dauerhaft befestigt sind.

Die Segmentkörper 42 weisen jeweils eine Reduzierring-Außenspannfläche 56 auf, die jeweils im Wesentlichen die Form einer Konus-Teilfläche haben, die lediglich durch eine Vertiefung 58 unterbrochen ist. Gemeinsam bilden die Reduzierring-Außenspannflächen 56 eine Konusteilform, die nur im Bereich der Verbindungskörper 44 und der genannten Vertiefungen 58 unterbrochen ist. Am proximalen Ende des Reduzierrings ist außenseitig ein Kopplungssteg 54 vorgesehen, der im Bereich des Verbindungskörpers 44 unterbrochen ist und der derart dimensioniert ist, dass er unter Bildung eines axialen Formschlusses an der Steg 34 der Zughülse 32 ankoppelbar ist.

Ist der Reduzierring 40 im Aufnahmebereich 14 des Spannfutters 10 angekoppelt, so ist durch die stiftförmigen Erhebungen 18 und die Vertiefungen 58 eine formschlüssige Drehsicherung gebildet, so dass der Reduzierring 40 schlupffrei gemeinsam mit dem Spannfutter 10 rotiert.

Die Segmentkörper 42 des Reduzierrings 40 bilden auch an der Innenseite eine Konusfläche, wobei diese durch einzelne Reduzierring-Innenspannflächen 66 der Segmentkörper 42 gebildet wird. Ähnlich wie an der Innenspannfläche 16 des Aufnahmebereichs 14 sind auch hier Erhebungen 68 vorgesehen, die zur Herstellung einer drehstarren Verbindung mit dem Spannkopf 80 vorgesehen sind.

Der Spannkopf 80 entspricht bekannten Spannköpfen, die üblicherweise in kleinere Spannfutter eingesetzt werden. Der Spannkopf 80 weist einen ähnlichen Aufbau wie der Reduzierring 40 auf, da er über metallische Segmente, die Spannkopfsegmente 82, verfügt, die ebenfalls über elastische Verbindungskörper 84 aus Gummi miteinander ringförmig verbunden sind. Die Außenspannflächen 86 des Spannkopfes 80 bilden die eigentlichen Spannflächen 92, die zur Anlage am Werkstück vorgesehen sind.

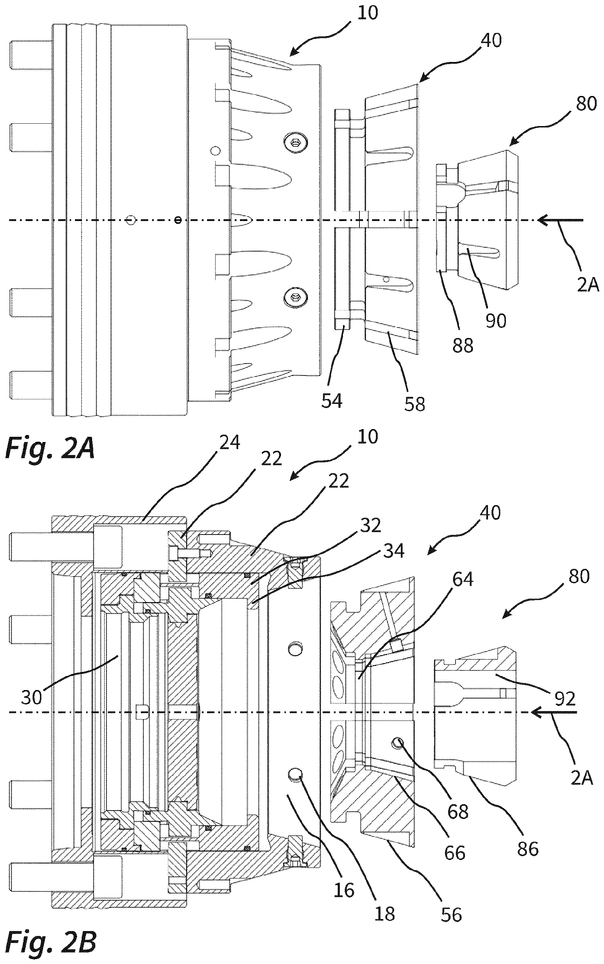

Die Figuren 2A und 2B zeigen die Komponenten des Spannmittels 100 in einer Seitendarstellung in geschnittener und in ungeschnittener Ansicht.

Das Spannfutter 10 weist verschiedene zueinander ortsfeste Gehäuseteile 20, 22, 24 auf. In einem durch diese Gehäuseteile 20, 22, 24 gebildeten Innenraum ist das axial verschiebliche Zugorgan 30 angeordnet, selbst auch mehrteilig ausgebildet ist und als in sich starrer Verbund auch die bereits beschriebene Zughülse 32 mit dem nach innen weisenden Steg 34 am distalen Ende aufweist.

Zum Zwecke der Montage des Spannmittels 100 wird zunächst der Reduzierring 40 in der richtigen Drehstellung in eine radial komprimierte Form gedrückt und dann derart eingesetzt, dass sein Kopplungssteg 54 erst jenseits des Stegs 34 der Zughülse 32 entspannt wird. Hierdurch wird eine axial formschlüssige Kopplung geschaffen.

Anschließend wird ebenfalls im radial komprimierten Zustand der Spannkopf 80 in der richtigen Drehstellung in den Reduzierring 40 eingesetzt, so dass sein Steg 88 den Kopplungssteg 64 des Reduzierrings 40 hintergreift.

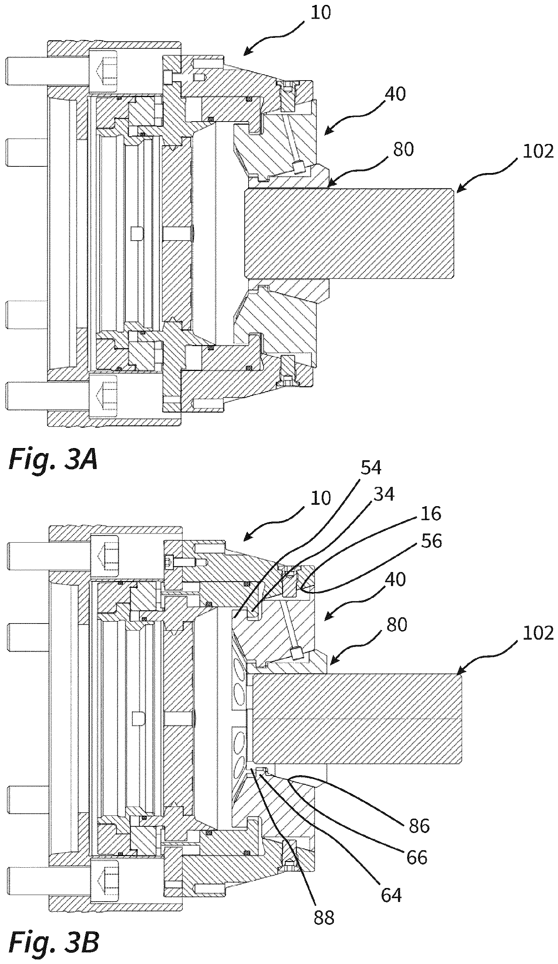

Im Betrieb wird ausgehend vom entspannten Zustand der Fig. 3A eine Zugkraft in das Zugorgan 30 eingeleitet, insbesondere elektrisch, hydraulisch oder pneumatisch. Diese zieht mittelbar über die Zughülse 32 den Reduzierring40 an das Spannfutter 10 an, so dass die Spannflächen 16,46 aneinander abgleiten, während der Reduzierring 40 gleichzeitig radial komprimiert wird.

Durch die Bewegung der Innenspannflächen 66 des Reduzierrings 40 aufeinander zu, wird auch der Spannkopf 80 über seine Spannfläche 86 kraftbeaufschlagt, so dass ein Werkstück 102 hierdurch radial festgespannt werden kann.

Anders als an der Außenseite des Reduzierrings 40 kommt es am Spannkopf 80 nicht oder kaum zu einem Abgleiten der Spannflächen 66, 86 aneinander. Stattdessen werden der Spannkopf 80 und mit ihm seine Spannkopfsegmente 82 unmittelbar radial zusammengedrückt, während der Spannkopf 80 in axialer Richtung gegenüber dem Reduzierring 40 allenfalls geringfügig verlagert wird, soweit es die Kopplung an den Stegen 64, 88 zulässt.

## Patentansprüche

1. Spannmittel (100) zum Festlegen von Werkstücken (102), insbesondere zum Zwecke der Rotationsbearbeitung dieser Werkstücke (102), mit den folgenden Merkmalen:
a. das Spannmittel (100) verfügt über ein in einer Axialspannrichtung (2A) erstrecktes Spannfutter (10), und
b. das Spannfutter (10) weist einen sich in der Axialspannrichtung (2A) verjüngenden Aufnahmebereich (14) zur Aufnahme eines Spannkopfes auf, wobei der Aufnahmebereich (14) von mindestens einer gegenüber der Axialspannrichtung (2A) schräggestellten Innenspannfläche (16) begrenzt ist, und
c. das Spannmittel (100) verfügt über einen Spannkopf (80), der aus einer Mehrzahl von ringartig zusammengefügten und gegeneinander beweglichen Spannkopfsegmenten (82) gebildet ist, und
d. der Spannkopf (80) weist eine sich in Axialspannrichtung (2A) verjüngende Form auf und verfügt hierzu außenseitig über gegenüber der Axialrichtung (2A) schräggestellte Außenspannflächen (86), und
e. das Spannmittel (100) verfügt über ein Zugorgan (30) zur Kraftbeaufschlagung des Spannkopfes (80) gegenüber dem Spannfutter (10) in Axialspannrichtung (2A), um durch die Kraftbeaufschlagung mittelbar die Spannkopfsegmente (82) radial aufeinander zu zu verlagern,
**gekennzeichnet durch** die folgenden weiteren Merkmale:
f. zwischen der mindestens einen Innenspannfläche (16) des Spannfutters (10) und den Außenspannflächen (86) des Spannkopfes (80) ist ein Reduzierring (40) vorgesehen, und
g. der Reduzierring (40) weist an seiner Außenseite korrespondierend zu der mindestens einen Innenspannfläche (16) des Spannfutters (10) mindestens eine außenseitige schräggestellte Reduzierring-Außenspannfläche (56) auf, und
h. der Reduzierring (40) weist an seiner Innenseite korrespondierend zu den Außenspannflächen (86) des Spannkopfes (80) mindestens eine innenseitige schräggestellte Reduzierring-Innenspannfläche (66) auf, und
i. der Reduzierring (40) verfügt über eine Mehrzahl von gegeneinander beweglichen Segmentkörpern (36) in ringförmiger Anordnung, an deren Außenseite jeweils mindestens eine Reduzierring-Außenspannfläche (56) vorgesehen ist und an deren Innenseite jeweils mindestens eine Reduzierring-Innenspannfläche (66) vorgesehen ist.

2. Spannmittel (100) nach Anspruch 1 mit dem folgenden weiteren Merkmal:
a. der Spannkopf (80) und der Reduzierring (40) weisen zusammenwirkende Kopplungseinrichtungen (64, 88) auf, mittels derer die Spannkopfsegmente (82) bezogen auf die Axialspannrichtung (2A) an die Segmentkörper (42) des Reduzierrings (40) ankoppelbar sind.

3. Spannmittel (100) nach Anspruch 1 oder 2 mit dem folgenden weiteren Merkmal:
a. der Reduzierring (40) verfügt über einen Kopplungsabschnitt (54) zur Ankopplung an das Zugorgan (30).

4. Spannmittel (100) nach Anspruch 3 mit dem folgenden weiteren Merkmal:
a. der Kopplungsabschnitt und das Zugorgan sind gemeinsam als Bajonettkopplungseinrichtung ausgebildet.

5. Spannmittel nach einem der Ansprüche 1 bis 4 mit mindestens einem derfolgenden weiteren Merkmale:
a. es ist eine Mehrzahl von Reduzierring-Außenspannflächen (56) vorgesehen, die gegeneinander angewinkelt und zumindest abschnittsweise eben sind, und/oder
b. es eine Mehrzahl von Reduzierring-Innenspannflächen (66) vorgesehen, die gegeneinander angewinkelt und zumindest abschnittsweise eben sind.

6. Spannmittel (100) nach einem der Ansprüche 1 bis 4 mit mindestens einem der folgenden weiteren Merkmale:
a. es ist eine Mehrzahl von Reduzierring-Außenspannflächen (56) vorgesehen, die jeweils eine Konusteilfläche darstellen, und/oder
b. es eine Mehrzahl von Reduzierring-Innenspannflächen (66) vorgesehen, die jeweils eine Konusteilfläche darstellen.

7. Spannmittel (100) nach einem der vorstehenden Ansprüche mit mindestens einem der folgenden zusätzlichen Merkmale:
a. die Segmentkörper (42) des Reduzierrings (40) sind über elastische Verbindungskörper (44) ringförmig miteinander verbunden und/oder
b. die Spannkopfsegmente (82) des Spannkopfs (80) sind über elastische Verbindungskörper (84) ringförmig miteinander verbunden.

8. Spannmittel (100) nach einem der vorstehenden Ansprüche mit dem folgenden zusätzlichen Merkmal:
a. der Reduzierring (40) weist mindestens drei Segmentkörper (42) auf und/oder der Reduzierring (40) weist höchstens sechs Segmentkörper (42) auf.

9. Spannmittel (100) nach einem der vorstehenden Ansprüche mit dem folgenden zusätzlichen Merkmal:
a. die Anzahl der Segmentkörper (42) des Reduzierrings (40) ist gleich der Anzahl der Spannkopfsegmente (82) des Spannkopfes (80) oder die Anzahl der Segmentkörper (42) des Reduzierrings (40) ist größer als die Anzahl der Spannkopfsegmente (82) des Spannkopfes (80).

10. Reduzierring (40) für Spannmittel (100) nach einem der vorstehenden Ansprüche mit dem folgenden zusätzlichen Merkmal:
a. der Reduzierring (40) weist in ringförmiger Anordnung die Mehrzahl von gegeneinander beweglichen Segmentkörpern (42) auf, an deren Außenseite jeweils die mindestens eine schräggestellte Reduzierring-Außenspannfläche (56) und an deren Innenseite jeweils die mindestens eine schräggestellte Reduzierring-Innenspannfläche (66) vorgesehen ist.
